# EUROPEAN PATENT SPECIFICATION

(11) **EP 2 970 589 B1**
(45) Date of publication and mention of the grant of the patent: **02.08.2017**
(21) Application number: 14712918.3
(22) Date of filing: 05.03.2014
(51) Int. Cl.: C08G 75/00, B05D 3/02, C08F 2/50, C08J 7/04, C08L 81/00

(54) **RADIATION CURABLE POLYTHIOETHERS WITH ALKYNE-BASED LINKAGE**
STRAHLUNGSHÄRTBARE POLYTHIOETHER MIT EINER AUF ALKYN BASIERENDEN BINDUNG
POLYTHIOÉTHERS DURCISSABLES PAR RAYONNEMENT À LIAISON À BASE D'ALCYNE

(30) Priority: 13.03.2013 US 201361779485 P
(43) Date of publication of application: 20.01.2016
(73) Proprietor: 3M Innovative Properties Company, St. Paul, MN 55133-3427 (US)
(72) Inventor: YE, Sheng, Saint Paul, Minnesota 55133-3427 (US); WRIGHT, Robin E., Saint Paul, Minnesota 55133-3427 (US); ZOOK, Jonathan D., Saint Paul, Minnesota 55133-3427 (US); DEMOSS, Susan E., Saint Paul, Minnesota 55133-3427 (US)
(74) Representative: Vossius & Partner Patentanwälte Rechtsanwälte mbB
(86) International application number: PCT/US2014/020587
(87) International publication number: WO 2014/164103

(56) References cited:
- US-A- 5 912 319
- US-A1- 2004 247 792
- US-A1- 2012 040 104

## Description

### Field of the Disclosure

This disclosure relates to certain polythioether polymers, compositions which are radiation curable to polythioether polymers, and seals and sealants comprising same.

US 2012/0040104 refers to methods for making a cured sealant comprising: (a) depositing an uncured sealant composition on a substrate; and (b) exposing the uncured sealant composition to actinic radiation to provide a cured sealant. In these methods, the uncured sealant composition comprises: (i) a thiol-terminated polythioether; and (ii) a polyene comprising a polyvinyl ether and/or a polyallyl compound.

US 5,912,319 relates to liquid polythioether polymers that have good low temperature flexibility and fuel resistance when cured. The invention is also directed to methods for making the polymers by reacting polythiols with oxygenated dienes (divinyl ethers) which substantially eliminate malodorous condensed cyclic by-products.

US 2004/0247792 is directed to polythioether polymers, curable compositions of polythioether polymers, processes for producing polythioether polymers, and the use of polythioether polymers in sealants, wherein the polythioether polymers and curable compositions are liquid at a temperature of 20° C or less.

### Summary of the Disclosure

The present invention is defined as in the appended claims. In particular, the present disclosure provides a composition which is radiation curable to a polythioether polymer, comprising: a) at least one dithiol monomer; b) at least one diene monomer; c) at least one polyyne monomer comprising at least two ethyne groups; and d) at least one photoinitiator. In some embodiments the composition may additionally comprise c) at least one epoxy resin.

In another aspect, the present application describes a composition which is radiation curable to a polythioether polymer, comprising: a) at least one dithiol monomer; b) at least one diene monomer; c) at least one diyne monomer; and d) at least one photoinitiator. In some embodiments the composition may additionally comprise e) at least one epoxy resin.

In another aspect, the present application describes a composition which is radiation curable to a polythioether polymer, comprising: f) at least one thiol terminated polythioether polymer; g) at least one diyne monomer; and h) at least one photoinitiator. In some embodiments the thiol terminated polythioether polymer comprises pendent hydroxide groups.

In some embodiments, the compositions described herein may additionally comprise a filler, in some embodiments a nanoparticle filler. In some embodiments, the composition may additionally comprise calcium carbonate. In some embodiments, the composition may additionally comprise nanoparticle calcium carbonate.

In some embodiments, the compositions described herein visibly change color upon cure. In some embodiments, the compositions described herein are curable by an actinic light source. In some embodiments, the compositions described herein are curable by a blue light source. In some embodiments, the compositions described herein are curable by a UV light source.

In another aspect, the present disclosure provides a sealant comprising any of the compositions described herein. In some embodiments, the sealant is transparent. In some embodiments, the sealant is translucent.

In another aspect, the present disclosure provides a polythioether polymer obtained by radiation cure of any the radiation curable compositions described herein. In some embodiments, the polythioether polymer has a Tg less than -55°C. In some embodiments, the polythioether polymer exhibits high jet fuel resistence characterized by a volume swell of less than 30% and a weight gain of less than 20% when measured according to Society of Automotive Engineers (SAE) International Standard AS5127/1.

In another aspect, the present disclosure provides a seal comprising any of the polythioether polymers described herein. In some embodiments, the seal is transparent. In some embodiments, the seal is translucent.

### Detailed Description

The present disclosure provides radiation curable polythioether polymers including alkyne linkages which may be particularly useful as sealant materials due to characterics such as low Tg and high resistance to solvemts such as jet fuel.

In some embodiments, the present disclosure relates to mercaptan based polythioether sealants containing radical photoinitiators. In some embodiments, the present disclosure relates to sealants that may be cured on demand in a one-step process in seconds by UV/LED radiation sources. In some embodiments, the sealants include fillers. In some embodiments, the sealants exclude fillers. In some embodiments, the sealant formulation contains a mercaptan based monomer (such as a dithiol) or oligomer (such as a linear polythioether or polysulfide), a diene or divinylether, a diyne, and a radical photoinitiator (such as Irgacure 819). In some embodiments, the sealant formulation includes an epoxy resin. In some embodiments, the sealant formulation includes calcium carbonate or nanoparticle calcium carbonate. By exposure to light around 450 nm, these compounds are curable in seconds to a rubber with low glass transition temperature (around -60 °C) and fuel resistance properties. As a result, use of the present sealant formulations has the potential to accelerate manufacturing.

In some embodiments, the sealant according to the present disclosure can simultaneously provide a long application life and cured on demand. In some embodiments, the sealant according to the present disclosure exhibit favorable solvent and fuel resistance properties. In some embodiments, the sealant according to the present disclosure exhibit favorable thermal resistance properties.

In some embodiments, the user applies the sealant according to the present disclosure as a single-component liquid formulation to the structure requiring sealing. In some embodiments, the user applies the sealant according to the present disclosure as a multi-component liquid formulation to the structure requiring sealing. In some embodiments, the sealant remains liquid and usable until the user applies an external source of electromagnetic (EM) radiation. Any suitable source of EM radiation can be used, most typically selected from actinic, blue and/or UV radiation. Upon application of the external EM radiation the liquid sealant then cures or crosslinks. In some embodiments, the sealant cures or crosslinks to an at least partially elastomeric solid in less than one minute.

This disclosure is useful in sealants, and in particular for the aerospace industry.

Objects and advantages of this disclosure are further illustrated by the following examples, but the particular materials and amounts thereof recited in these examples, as well as other conditions and details, should not be construed to unduly limit this disclosure.

### Examples

Unless otherwise noted, all reagents were obtained or are available from Sigma-Aldrich Company, St. Louis, Missouri, or may be synthesized by known methods. Unless otherwise reported, all ratios are by weight percent.

The following abbreviations are used to describe the examples:
- °C:: degrees Centigrade
- cm:: centimeter
- LED:: light emitting diode
- mm:: millimeter
- nm:: nanometer
- T_{g}:: glass transition temperature
- W:: Watt

### Materials.

Abbreviations for the reagents used in the examples are as follows:
- DMDO:: 1,8-Dimercapto-3,6-dioxaoctane, obtained from Arkena, Inc., King of Prussia, Pennsylvania.
- DVE-2:: Diethyleneglycol divinyl ether, obtained from BASF Corp., Florham Park, New Jersey.
- DVE-3:: Triethyleneglycol divinylether, obtained under the trade designation "RAPI-CURE DVE-3" from Ashland Specialty Ingredients, Wilmington, Delaware.
- E-8220:: A diglycidylether of bisphenol F, obtained under the trade designation "EPALLOY 8220" from Emerald Performance Materials, LLC, Cuyahoga Falls, Ohio.
- HDY:: 1,6-heptadiyne, obtained from GFS Chemicals, Inc., Powell, Ohio.
- 1-819:: Phenylbis(2,4,6-trimethylbenzoyl)phosphine Oxide, obtained under the trade designation "IRGACURE 819" from BASF Corp., Florham Park, New Jersey.
- NCC:: Nanoparticle (70 - 100 nm) calcium carbonate, obtained under the trade designation "SOCAL 31" from Solvay Chemicals, Inc., Houston, Texas.
- ODY:: 1,7- octadiyne, obtained from ChemSampCo, Inc., Trenton, New Jersey.
- PTE:: A liquid polythioether polymer prepared as follows. Into a 5 liter round bottom flask equipped with an air driven stirrer, thermometer, and a condenser, was added 167.1 grams (0.51 mol) E-8220 and 1641 grams (9.0 mol) DMDO. After several minutes of stirring the mixture exothermed to 45°C. After another 30 minutes, the temperature of the flask was increased 75°C and a mixture of 1428.1 grams (7.1 mol) DVE-3, 50.7 grams (0.2 mol) TAC and 13.1 grams (0.07 mol) VAZO-67 was added drop wise. The reaction proceeded substantially to completion affording 3,300 grams of polythioether polymer.
- TAC:: Triallylcyanurate, obtained from Sartomer, Inc., Exton, Pennsylvania.
- VAZO-67:: 2,2'-azobis(2-methylbutyronitrile, obtained under the trade designation "VAZO-67" from E.I. du Dupont de Nemours and Company, Wilmington, Delaware.

### Example 1

A curable polythioether composition was prepared as follows. A 40 ml. amber glass vial was charged with 7.000 grams DMDO, 5.212 grams DVE-2, 0.125 grams 1-819 and 0.251 grams HDY at 21°C. The vial was then sealed and placed on a laboratory roller mill for 10 minutes until the I-819 had dissolved.

### Example 2.

A curable polythioether composition was prepared as generally described in Example 1, wherein after the resin and initiator were dissolved, 1.888 grams NCC was homogeneously dispersed in the composition by means of a high speed mixer for 1 minute.

### Example 3.

A curable polythioether composition was prepared as generally described in Example 1, wherein the HDY was substituted with 0.289 grams ODY.

### Example 4.

A curable polythioether composition was prepared as generally described in Example 3, wherein after the resin and initiator were dissolved, 1.894 grams NCC was homogeneously dispersed in the composition by means of a high speed mixer for 1 minute.

### Example 5.

A 40 ml. amber glass vial was charged with 10.000 grams PTE, 0.102 grams 1-819 and 0.172 grams HDY at 21°C. The vial was then sealed and placed on a laboratory roller mill for 12 hours until the 1-819 had dissolved.

### Example 6.

A curable polythioether composition was prepared as generally described in Example 5, wherein after the resin and initiator were dissolved, 1.545 grams NCC was homogeneously dispersed in the composition by means of a high speed mixer for 1 minute.

### Example 7.

A curable polythioether composition was prepared as generally described in Example 5, wherein the HDY was substituted with 0.198 grams ODY.

### Example 8.

A curable polythioether composition was prepared as generally described in Example 7, wherein after the resin and initiator were dissolved, 1.545 grams NCC was homogeneously dispersed in the composition by means of a high speed mixer for 1 minute.

### Example 9.

A curable polythioether composition was prepared as generally described in Example 3, wherein the amount of 1-819 was increased to 0.250 grams.

### Example 10.

A curable polythioether composition was prepared as generally described in Example 9, wherein after the resin and initiator were dissolved, 1.913 grams NCC was homogeneously dispersed in the composition by means of a high speed mixer for 1 minute.

Samples were poured into a nominally 2 cm by 2 cm silicone rubber mold of various heights, at 21°C and cured by exposure, according to the times listed in Table 1, to one of the following actinic light sources:
A 4 W/cm², 395 nm LED, model "STARFIRE MAX" from Phoseon Technology, Hillsboro, Oregon, at a distance of 2.54 cm, or
A 455 nm LED, model "CF2000", obtained from Clearstone Technologies, Inc., Minneapolis, Minnesota, at a distance of 0.635 cm.

### Test Methods.

The following test methods were used to evaluate cured samples:
Shore A Hardness: Measured using a model "1600" hardness gauge, obtained from Rex Gauge Company, Inc., Buffalo Grove, Illinois.
Tg: Measured using a model "DSC Q2000" differential scanning calorimeter, obtained from TA Instruments, New Castle, Delaware.
Jet Fuel Resistance: Measured according to Society of Automotive Engineers (SAE) International Standard AS5127/1, wherein samples were immersed in Jet Reference Fluid Type 1 (JRF1) for 7 days at 60°C, after which % swell and % weight gain of the sample were determined. JRF1 composition is defined by SAE Standard AMS2629.
Color Change: Measured before and after curing using a model "MINISCAN XE PLUS D/8S" colorimeter, in mode D65/10*, obtained from Hunter Associates Laboratory, Inc., Reston, Virginia.

Results listed in Table 1 represent the average values of triplicate samples measured for thickness and Shore A hardness, and the average values for duplicate measurements of T_{g}. Selected examples were also subjected to the Jet Fuel Resistance test, and are reported in Table 2. Color change measurements, as an average of three reading and expressed as L*a*b* and ΔE values, are listed in Table 3.

**TABLE 1**

| Example | Light Source | Cure Time (Seconds) | Thickness (mm) | Shore A Hardness (%) | T_{g} (°C) |
|---|---|---|---|---|---|
| 1 | STARFIRE MAX | ≥180 | Insufficiently Cured - Not Measured | | |
| 2 | STARFIRE MAX | 60 | 2.1 | 35.6 | -63.0 |
| 3 | STARFIRE MAX | ≥180 | Insufficiently Cured - Not Measured | | |
| 3 | CF2000 | 30 | 11.1 | 42.0 | -60.8 |
| 4 | STARFIRE MAX | 10 | 2.2 | 54.0 | -62.7 |
| 4 | CF2000 | 30 | 4.3 | 60.0 | -61.9 |
| 5 | STARFIRE MAX | ≥180 | Insufficiently Cured - Not Measured | | |
| 6 | STARFIRE MAX | 180 | 2.3 | 48.6 | -59.7 |
| 7 | STARFIRE MAX | 180 | 2.5 | 41.4 | -60.1 |
| 7 | CF2000 | 30 | 3.4 | 43.0 | -58.6 |
| 8 | STARFIRE MAX | 15 | 2.0 | 59.8 | -59.7 |
| 8 | CF2000 | 30 | 4.4 | 46.0 | -59.6 |

**TABLE 2**

| Example | Jet Fuel Resistance Test | | |
|---|---|---|---|
| | % Volume Swell | % Weight Gain | % Weight Loss Upon Drying |
| 2 | 21 | 13 | 3.8 |
| 4 | 22 | 14 | 3.2 |
| 8 | 25 | 17 | 3.6 |

**TABLE 3**

| Example | Curing Step | L* | a* | b* | ΔE |
|---|---|---|---|---|---|
| 9 | Before | 88.35 | -11.44 | 25.57 | 16.79 |
| | After | 86.82 | -4.39 | 10.41 | |
| 10 | Before | 84.82 | -11.81 | 19.80 | 14.37 |
| | After | 83.80 | -4.76 | 7.32 | |

## Claims

1. A composition which is radiation curable to a polythioether polymer, comprising:
a) at least one dithiol monomer;
b) at least one diene monomer;
c) at least one polyyne monomer comprising at least two ethyne groups; and
d) at least one photoinitiator.

2. The composition according to claim 1 additionally comprising:
e) at least one epoxy resin.

3. The composition according to any of the preceding claims additionally comprising:
i) at least one filler.

4. The composition according to any of the preceding claims additionally comprising:
j) at least one nanoparticulate filler.

5. The composition according to any of the preceding claims additionally comprising:
k) calcium carbonate.

6. The composition according to any of the preceding claims additionally comprising:
1) nanoparticle calcium carbonate.

7. The composition according to any of the preceding claims which visibly changes color upon cure.

8. The composition according to any of the preceding claims which is curable by actinic light source.

9. A sealant comprising the composition according to any of the preceding claims.

10. A branched polythioether polymer obtained by radiation cure of any the composition according to any of claims 1-8.

11. The branched polythioether polymer according to claim 10 having a Tg less than -55 °C.

12. The branched polythioether polymer according to claim 10 or 11 which exhibits, high jet fuel resistence **characterized by** a volume swell of less than 30% and a weight gain of less than 20% when measured according to Society of Automotive Engineers (SAE) International Standard AS5127/1.

## Patentansprüche

1. Eine Zusammensetzung, die zu einem Polythioether-Polymer strahlungshärtbar ist, umfassend:
a) mindestens ein Dithiol-Monomer;
b) mindestens ein Dien-Monomer;
c) mindestens ein Polyin-Monomer, umfassend mindestens zwei Ethin-Gruppen; und
d) mindestens einen Photoinitiator.

2. Die Zusammensetzung nach Anspruch 1, zusätzlich umfassend:
e) mindestens ein Epoxidharz.

3. Die Zusammensetzung nach einem der vorstehenden Ansprüche, zusätzlich umfassend:
i) mindestens einen Füllstoff.

4. Die Zusammensetzung nach einem der vorstehenden Ansprüche, zusätzlich umfassend:
j) mindestens einen Nanoteilchen-Füllstoff.

5. Die Zusammensetzung nach einem der vorstehenden Ansprüche, zusätzlich umfassend:
k) Calciumcarbonat.

6. Die Zusammensetzung nach einem der vorstehenden Ansprüche, zusätzlich umfassend:
l) Nanoteilchen-Calciumcarbonat.

7. Die Zusammensetzung nach einem der vorstehenden Ansprüche, die beim Härten sichtbar die Farbe ändert.

8. Die Zusammensetzung nach einem der vorstehenden Ansprüche, die durch eine aktinische Lichtquelle härtbar ist.

9. Ein Dichtmittel, umfassend die Zusammensetzung nach einem der vorstehenden Ansprüche.

10. Ein verzweigtes Polythioether-Polymer, das durch Strahlungshärtung einer Zusammensetzung nach einem der Ansprüche 1 bis 8 erhalten wird.

11. Das verzweigte Polythioether-Polymer nach Anspruch 10 mit einer Tg von weniger als -55 °C.

12. Das verzweigte Polythioether-Polymer nach Anspruch 10 oder 11, das hohe Düsentreibstoffbeständigkeit aufweist, **gekennzeichnet durch** eine Volumenquellung von weniger als 30 % und eine Gewichtszunahme von weniger als 20 %, gemessen gemäß Internationalem Standard AS5127/1 der Society of Automotive Engineers (SAE).

## Revendications

1. Composition qui est durcissable par rayonnement en un polymère polythioéther, comprenant :
a) au moins un monomère de dithiol ;
b) au moins un monomère diénique ;
c) au moins un monomère de polyyne comprenant au moins deux groupes éthyne ; et
d) au moins un photo-inducteur.

2. Composition selon la revendication 1, comprenant en outre :
e) au moins une résine époxy.

3. Composition selon l'une quelconque des revendications précédentes, comprenant en outre :
i) au moins une charge.

4. Composition selon l'une quelconque des revendications précédentes, comprenant en outre :
j) au moins une charge nanoparticulaire.

5. Composition selon l'une quelconque des revendications précédentes, comprenant en outre :
k) du carbonate de calcium.

6. Composition selon l'une quelconque des revendications précédentes, comprenant en outre :
l) du carbonate de calcium nanoparticulaire.

7. Composition selon l'une quelconque des revendications précédentes, qui change visiblement de couleur au durcissement.

8. Composition selon l'une quelconque des revendications précédentes, qui est durcissable par une source lumineuse actinique.

9. Mastic comprenant la composition selon l'une quelconque des revendications précédentes.

10. Polymère polythioéther ramifié obtenu par durcissement par rayonnement d'une quelconque composition selon l'une quelconque des revendications 1 à 8.

11. Polymère polythioéther ramifié selon la revendication 10 ayant une Tg inférieure à -55 °C.

12. Polymère polythioéther ramifié selon la revendication 10 ou 11, qui présente une résistance élevée au carburéacteur, **caractérisé par** un gonflement en volume inférieur à 30 % et un gain de poids inférieur à 20 % lorsqu'on mesure selon la norme internationale AS5127/1 de la Society of Automotive Engineers (SAE).
